# EUROPÄISCHE PATENTSCHRIFT

(11) **EP 2 487 429 B1**
(45) Veröffentlichungstag und Bekanntmachung des Hinweises auf die Patenterteilung: **01.03.2017**
(21) Anmeldenummer: 11154179.3
(22) Anmeldetag: 11.02.2011
(51) Int. Cl.: F24F 3/044, F24F 13/20, A47B 47/00, F16M 1/00

(54) **Quaderförmiges, insbesondere kubusförmiges, Gehäuse zur Aufnahme von Komponenten einer klima- und/oder raumlufttechnischen Anlage**
Square-shaped, particularly cuboid, casing for keeping components of a climate and/or room air control system
Boîtier carré, notamment en forme de cube, pour la réception de composants d'une installation technique de climatisation et/ou d'air ambiant

(30) Priorität: 10.02.2011 EP 11154079
(43) Veröffentlichungstag der Anmeldung: 15.08.2012
(73) Patentinhaber: TROX GmbH, 47506 Neukirchen-Vluyn (DE)
(72) Erfinder: Baumeister, Gregor, 47802 Krefeld (DE); Hetzel, Georg, 57462 Olpe (DE); Joneleit, Ralf, 47445 Moers (DE); Niklas, Klaus, 47495 Rheinberg (DE)
(74) Vertreter: DR. STARK & PARTNER

(56) Entgegenhaltungen:
- EP-A1- 0 933 599
- EP-A1- 1 152 194
- DE-C1- 19 719 783

## Beschreibung

Die Erfindung betrifft ein quaderförmiges, insbesondere kubusförmiges, Gehäuse zur Aufnahme von Komponenten einer klima- und/oder raumlufttechnischen Anlage, wie beispielweise einem Ventilator, einem Filter, einem Wärmeübertrager oder dergleichen, wobei das Gehäuse zumindest eine Lufteintrittsöffnung, zumindest eine Luftaustrittsöffnung sowie ein Gestell aufweist, wobei das Gestell aus wenigstens zwölf Gestellsegmenten, welche die Kantenlinien bilden, besteht und die Gestellsegmente wenigstens sechs offene Seitenflächen aufspannen, und jede offene Seitenfläche, sofern das Gehäuse mit dieser offenen Seitenfläche nicht zumindest in einem Teilbereich dieser Seitenfläche dichtend mit der offenen Seitenfläche eines benachbarten Gehäuses zusammenwirkt, mit einem Paneelelement verschlossen ist, welches eine die offene Seitenfläche verschließende Innenwandung, eine die offene Seitenfläche verschließende Außenwandung und eine zwischen der Innenwandung und der Außenwandung befindliche Dämmung, insbesondere einen aus Dämmmaterial bestehenden Kern, aufweist.

Das Gestell weist zumindest zwölf Gestellsegmente auf, welche die Kantenlinien bilden. Die Gestellsegmente spannen dabei sechs offene Seitenflächen auf. Selbstverständlich ist es möglich, dass zusätzlich noch als Zwischensteg oder Zwischenelement ausgebildete Gestellsegmente vorgesehen sind. Sofern beispielsweise ein als Zwischensteg oder Zwischenelement ausgebildetes Gestellsegment vorgesehen ist, erstreckt sich dieses Gestellelement durch eine offene Seitenfläche hindurch und teilt diese in Teilflächen auf. Selbstverständlich sind auch mehrere als Zwischensteg oder Zwischenelement ausgebildete Gestellsegmente innerhalb einer Seitenfläche denkbar.

**Die** EP 1 152 194 A1 **beschreibt eine Eckverbindung eines Gehäuserahmens von Lüftungs- und Klimageräten. Aus der** DE 197 19 783 C1 **und der** EP 0 933 599 A1 **sind Gehäuse für Lüftungsgeräte bekannt.**

Die DE 197 19 783 C1 offenbart ein Gehäuse mit den Merkmalen des Oberbegriffs von Anspruch 1.

In einem derartigen Gehäuse sind die erforderlichen Komponenten einer klima- und/oder raumlufttechnischen Anlage eingebaut. Je nach dem benötigten Platz können auch mehrere Gehäuse untereinander verbunden sein, wobei dann üblicherweise nur die offenen Seitenflächen, die nicht mit einem benachbarten Gehäuse in Kontakt sind, mit Paneelelementen verschlossen sind. Das Gestell eines Gehäuses ist nach Art eines Drahtkäfigs ausgebildet, wobei jeweils vier Gestellsegmente eine offene Seitenfläche aufspannen. Die Lufteintrittsöffnung und/oder die Luftaustrittsöffnung können im Bereich einer gemeinsamen Seitenfläche oder auch in zwei verschiedenen Seitenflächen angeordnet sein. Die Lufteintrittsöffnung und/oder die Luftaustrittsöffnung können sich nur über einen Teilbereich oder aber auch über eine komplette Seitenfläche erstrecken. In dem Gehäuse selbst kann je nach der gewünschten Betriebsweise auch ein Unterdruck oder auch ein Überdruck eingestellt werden. Nachteilig ist, dass bei bekannten Gehäusen Wärme über die Paneelelemente und auch über das Gestell an die Umgebung abgegeben wird, was zu unerwünschten Verlusten führt.

Aufgabe der Erfindung ist es, die vorgenannten Nachteile zu vermeiden und ein Gehäuse anzugeben, das leicht mon tierbar und beispielsweise für eine Wartung auch leicht zugänglich ist und eine bessere Dämmung aufweist.

Diese Aufgabe wird dadurch gelöst, dass jedes Paneelelement im Bereich jeder Kante ein die Außen- und Innenwandung thermisch trennendes Profil, insbesondere Kunststoffprofil, aufweist, wobei das Profil zwei Anlageschenkel mit jeweils einer Anlagefläche aufweist, wobei der eine Anlageschenkel mit seiner Anlagefläche im montierten Zustand mit der Außenseite des Gestellsegmentes direkt oder über wenigstens ein weiteres Bauteil in Kontakt ist und der andere Anlageschenkel mit seiner Anlagefläche im montierten Zustand derjenigen Seite des Gestellsegmentes, die in Richtung des durch die vier die offene Seitenfläche bildenden Gestellsegmente umschlossenen Inneren weisend angeordnet ist, zugewandt ist, wobei die jeweiligen Anlageschenkel zweier aneinandergrenzender Profile benachbarter Paneelelemente so ausgebildet sind, dass das Gestell zumindest außenseitig überdeckt wird.

Eine offene Seitenfläche kann dabei von einem einzigen Paneelelement verschlossen sein. In diesem Fall ist dieses Paneelelement über seine Profile in Kontakt mit den Seiten vierer Gestellsegmente, die dem Inneren, das durch die vier die offene Seitenfläche bildenden Gestellsegmente umschlossen ist, zugewandt sind.

Es ist aber auch durchaus möglich, dass ein Paneelelement mehrteilig, insbesondere zweiteilig, unter Bildung einer entsprechenden Anzahl an Paneelteilelementen ausgebildet ist. In diesem Fall wird eine offene Seitenfläche von der entsprechenden Anzahl an Paneelteilelementen verschlossen. Bei beispielsweise zwei Paneelteilelementen ist jedes der beiden Paneelteilelemente über die Profile in Kontakt mit den Seiten dreier Gestellsegmente, die dem Inneren, das durch die vier die offene Seitenfläche bildenden Gestellsegmente umschlossen ist, zugewandt sind. Über die verbleibende jeweilige vierte Seite berühren sich die beiden Paneelteilelemente dichtend miteinander. Es ist möglich, dass in dem Kontaktbereich zweier Paneelteilelemente ein als Zwischensteg oder Zwischenelement ausgebildetes Gestellsegment vorgesehen ist, das als Anschlag für beide Paneelteilelemente dient.

Damit greift jedes Paneelelement mit einem Teilbereich in die offene Seitenfläche ein, wobei die Anlageflächen in Kontakt sind mit denjenigen Seiten des Gestellelementes, die dem Inneren zugewandt sind, das durch die vier die offene Seitenfläche bildenden Gestellsegmente umschlossen ist. Alternativ sind die Anlageflächen in einem geringen Abstand unter Bildung eines schmalen Freiraumes zu denjenigen Seiten des Gestellelementes, die dem Inneren zugewandt sind, das durch die vier die offene Seitenfläche bildenden Gestellsegmente umschlossen ist, angeordnet.

Der außerhalb der offenen Seitenfläche befindliche Teil jedes Paneelelementes ist so ausgebildet, dass die offene Seitenfläche von außen überdeckt wird. Dabei ist dieser Bereich der Anlagefläche in direktem Kontakt mit der Außenseite des Gestells. Es ist aber auch durchaus möglich, dass zwischen der Anlagefläche und der Außenseite des Gestells noch ein weiteres Bauteil, insbesondere zur Erzielung einer besseren Abdichtung, vorgesehen ist.

Durch die Ausgestaltung der Profile wird das Gestell, d.h. die Gestellsegmente, zumindest von außen überdeckt. Da die Innenwandung und die Außenwandung durch das Profil thermisch voneinander getrennt sind und auch das Gestell nach außen hin vollständig verdeckt wird, werden Wärmeverluste reduziert.

Sofern ein Paneelelement im rechten Winkel zu einem angrenzenden Paneelelement steht, bietet es sich an, wenn zumindest jeweils ein Anlageschenkel der beiden aneinandergrenzenden Profile im Bereich seines freien Endes des die Außenseite des Gestellsegmentes überdeckenden Anlageschenkels in einem Winkel (α) von etwa 135° zur Anlagefläche ausgebildet ist. Damit ist das Gestellsegment von außen vollständig durch die Profile überdeckt.

Es bietet sich an, wenn zumindest jeweils ein Anlageschenkel aneinandergrenzender Profile im Bereich seines freien Endes des die Außenseite des Gestellsegmentes überdeckenden Anlageschenkels einen in einem Winkel (α) von etwa 135° zur Anlagefläche angeordneten, insbesondere im Bereich der Innenkante angeordneten, Steg aufweist, der an seinem freien Ende einen rückwärtsgerichteten, in Richtung der Außenwandung des Paneelelementes weisenden Abschnitt aufweist. Das freie Ende des Abschnittes endet vorzugsweise in der Ebene der Außenwandung des betreffenden Paneelelementes oder ist leicht gegenüber der generellen Erstreckung der Außenwandung zurückversetzt.

Der Steg kann federnd ausgebildet sein und der Winkel (α) kann etwas größer als 135°, vorzugsweise etwa 138°, sein. Sind zwei benachbarte Paneelelemente in einem 90° Winkel zueinander angeordnet, wird auf diese Weise eine unerwünschte Spaltbildung vermieden. Im montierten Zustand werden die beiden Stege der Paneelelemente gegen ihre Rückstellkraft verlagert, so dass sie dicht und damit spaltfrei aneinander anliegen.

Der Abschnitt kann von außen betrachtet gekrümmt als Radius ausgebildet sein. Die Kontur des Abschnittes liegt dabei vorzugsweise auf einer Kreislinie. Der Mittelpunkt dieser Kreislinie ist durch den Schnittpunkt zweier rechtwinklig zur jeweiligen Außenwandung ausgerichteter Geraden bestimmt. Der Radius entspricht dem Abstand zwischen der Außenseite der Außenwandung und dem Schnittpunkt.

Der Steg und der Abschnitt können über einen abgerundeten Übergangsbereich verbunden sein.

Das Profil kann Glas- und/oder Kohlefaser oder dergleichen beinhalten.

Das Profil kann Polyamid (PA), insbesondere PA 6, beinhalten.

Das Profil kann als Hohlkammerprofil ausgebildet sein.

In dem Anlageschenkel, der im montierten Zustand mit der Außenseite des Gestellelementes in Kontakt ist, kann zumindest eine Aufnahme für ein Befestigungsmittel, wie eine Schraube, einen Klips oder Drehverschluss, insbesondere Vierteldrehverschluss oder dergleichen, vorgesehen sein.

Es bietet sich an, wenn zumindest ein Befestigungsmittel vorgesehen ist, welches insbesondere gegenüber dem Paneelelement, insbesondere gegenüber der Außenwandung und/oder Innenwandung, thermisch getrennt ist und/oder welches insbesondere mit einer Aufnahme für ein Befestigungsmittel zusammenwirkt. Sofern als Befestigungsmittel beispielsweise eine Schraube vorgesehen ist, kann eine Kunststoffunterlegscheibe verwendet werden. Alternativ kann der Kopf der Schraube beispielsweise durch einen Kunststoffüberzug bzw. Kappe abgedeckt sein.

Zur thermischen Trennung kann eine Unterlegscheibe, insbesondere eine Kunststoffunterlegscheibe, vorgesehen sein. Diese trennt beispielsweise den Schraubenkopf von der Außenwandung.

Es ist auch möglich, alternativ oder auch in Ergänzung zu einer Unterlegscheibe zumindest ein Befestigungsmittel, beispielsweise den Schraubenkopf des Befestigungsmittels, in dem Profil zu versenken. Hierzu weist die Außenwandung und/oder das Profil eine Öffnung auf, deren Abmessungen größer als die Abmessungen des betreffenden Schraubenkopfes sind. Die Öffnung kann nach Befestigung des Befestigungsmittels durch einen Stopfen, der z.B. aus Kunststoff besteht, verschlossen werden.

Im Bereich der Anlagefläche, insbesondere der im montierten Zustand mit der Außenseite des Gestellsegmentes in Kontakt befindlichen Anlagefläche, kann eine Dichtung, insbesondere eine geschäumte Dichtung, vorgesehen sein. Hierdurch werden Leckagen vermieden, so dass ein Überdruck oder Unterdruck innerhalb des Gehäuses eingestellt werden kann.

Die Dichtung kann in einer, insbesondere in der Anlagefläche vorgesehenen, Aufnahmemulde angeordnet sein.

Es bietet sich an, wenn die Außenwandung und/oder die Innenwandung randseitig in Richtung der entsprechenden Dämmung abgewinkelt ist(sind). Hierdurch erhält das Paneelelement ein optisch einheitliches Erscheinungsbild. Da die betreffenden Kanten in Richtung der Dämmung abgewinkelt sind, stehen die Kanten nicht vor und stellen kein Verletzungsrisiko dar. Gleichzeitig wird durch die Abwinklung die Stabilität des Paneelelementes erhöht. Die Außenwandung und/oder Innenwandung können beispielsweise mit dem Profil verklebt sein.

Zumindest ein Paneelelement oder Paneelteilelement kann als Tür ausgebildet sein.

Die Gestellsegmente zweier benachbarter Gehäuse können, insbesondere durch Verschrauben, miteinander verbunden sein.

Die Außen- und/oder Innenwandung kann (können) aus Blech, insbesondere aus Stahlblech, besteht(bestehen). Die Dicke kann beispielsweise 1mm betragen.

Das Gestell kann aus Stahl, insbesondere Edelstahl oder verzinktem Stahl, wie z. B. einem Profilrohr aus verzinktem Stahl, oder einem anderen geeigneten Material bestehen.

Zumindest ein Gestellsegment kann einen viereckigen Querschnitt aufweisen.

Das Gehäuse kann selbstverständlich auch im Bereich derjenigen offenen Seitenfläche, mit der es dichtend mit der offenen Seitenfläche eines benachbarten Gehäuses zusammenwirkt, ein Paneelelement aufweisen.

Sofern zwei Gehäuse unterschiedlicher Kantenlängen miteinander verbunden werden, bietet es sich an, wenn das größere Gehäuse im Bereich einer solchen offenen Seitenfläche, mit der es lediglich in einem Teilbereich dieser Seitenfläche dichtend mit einer offenen Seitenfläche eines benachbarten Gehäuses zusammenwirkt, ein Paneelelement aufweist, wobei das Paneelelement nur diejenigen Teilbereiche der Seitenfläche verschließt, welche nicht durch die offene Seitenfläche des besagten benachbarten Gehäuses verschlossen sind.

Dabei bietet es sich weiterhin an, wenn das Paneelelement eine die offene Seitenfläche verschließende Außenwandung und eine zwischen der Innenwandung und der Außenwandung befindliche Dämmung, insbesondere einen aus Dämmmaterial bestehenden Kern, aufweist.

Im Folgenden wird ein in den Zeichnungen dargestelltes Ausführungsbeispiel der Erfindung erläutert. Es zeigen:
- Fig. 1: eine schräge Seitenansicht auf mehrere miteinander verbundene erfindungsgemäße Gehäuse,
- Fig. 2: einen vertikalen Schnitt durch den Eckbereich eines Gehäuses,
- Fig. 3: einen vertikalen Schnitt durch den Eckbereich eines Gehäuses mit einer anderen Verschraubung,
- Fig. 4: einen vertikalen Schnitt im Bereich eines als Zwischensteg ausgebildeten Gestellsegmentes,
- Fig. 5: einen vertikalen Schnitt im Bereich eines gemeinsamen Gestellsegmentes von zwei aneinandergrenzenden benachbarten Gehäusen,
- Fig. 6: die Rückansicht auf zwei erfindungsgemäße Gehäuse ohne eine unterseitige Rahmenkonstruktion,
- Fig. 7: eine Frontansicht auf den Gegenstand nach Fig. 6,
- Fig. 8: die Frontansicht auf zwei erfindungsgemäße Gehäuse mit einer unterseitigen Rahmenkonstruktion,
- Fig. 9: eine Rückansicht auf den Gegenstand nach Fig. 8 und
- Fig. 10: eine vergrößerte Darstellung einer Ecke eines Gehäuses.

In allen Figuren werden für gleiche bzw. gleichartige Bauteile übereinstimmende Bezugszeichen verwendet.

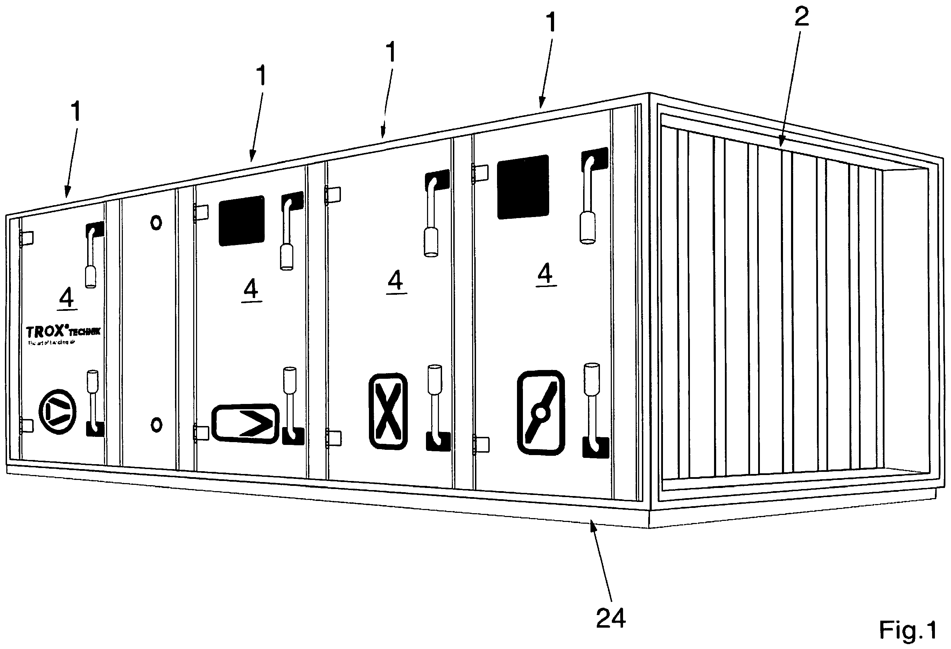

Fig. 1 zeigt eine Seitenansicht auf vier, jeweils im Bereich einer offenen Seitenfläche miteinander verbundene erfindungsgemäße Gehäuse 1, in denen nicht näher dargestellte Komponenten einer klima- und/oder raumlufttechnischen Anlage angeordnet sind.

In dem rechten Gehäuse ist beispielhaft eine sich über die ganze Seitenfläche erstreckende Lufteintrittsöffnung 2 dargestellt. Die Luftaustrittsöffnung kann beispielsweise in dem linken Gehäuse 1 vorgesehen sein. Selbstverständlich kann die Anzahl und die Ausrichtung der Gehäuse 1 untereinander beliebig gewählt werden.

Jedes Gehäuse 1 weist ein Gestell auf, wobei das Gestell aus zwölf viereckigen Gestellsegmenten 3, welche die Kantenlinie bilden, besteht. Damit spannen die Gestellsegmente 3 sechs offene Seitenflächen auf. Jedes Gehäuse 1 ist im Bereich seiner offenen Seitenflächen mit je einem Paneelelement 4 verschlossen. Das linke und das rechte Gehäuse 1 weisen je eine und die beiden mittleren Gehäuse 1 jeweils zwei offene Seitenflächen auf, die jeweils dichtend mit der offenen Seitenfläche eines benachbarten Gehäuses 1 verbunden sind. Damit sind alle vier Gehäuse 1 nach außen hin verschlossen. Selbstverständlich ist jedes Gehäuse 1 auch von oben und von unten durch je ein Paneelelement 4 verschlossen.

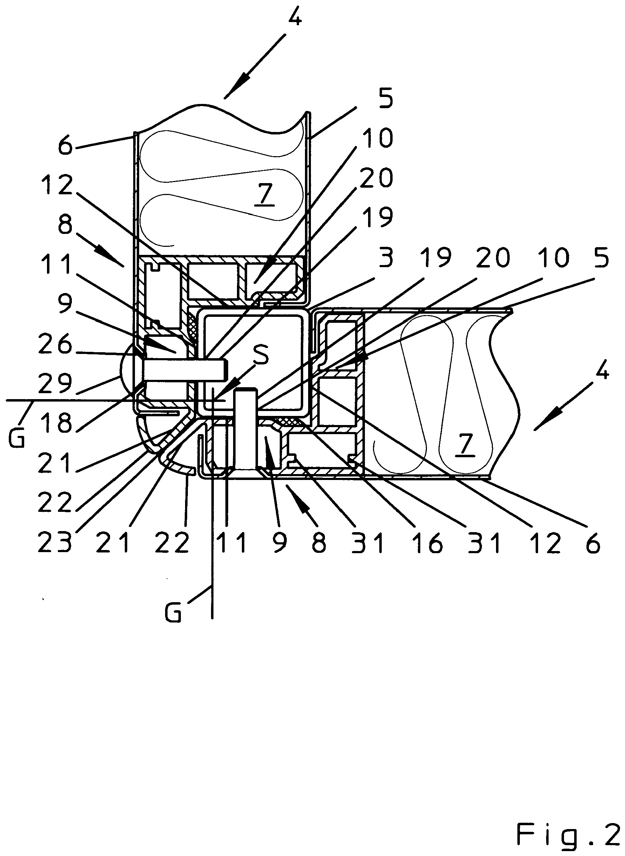

Wie den Fig. 2 bis 5 zu entnehmen ist, weist jedes Paneelelement 4 eine Innenwandung 5, eine Außenwandung 6 und eine dazwischen befindliche Dämmung 7 auf. Randseitig weist jedes Paneelelement 4 im Bereich jeder Kante ein die Außen- und Innenwandung 6, 5 thermisch trennendes Profil 8 auf, das in dem dargestellten Ausführungsbeispiel als Hohlkammerprofil ausgebildet ist. Das Profil 8 ist mit der Außen- und Innenwandung 6, 5 verklebt.

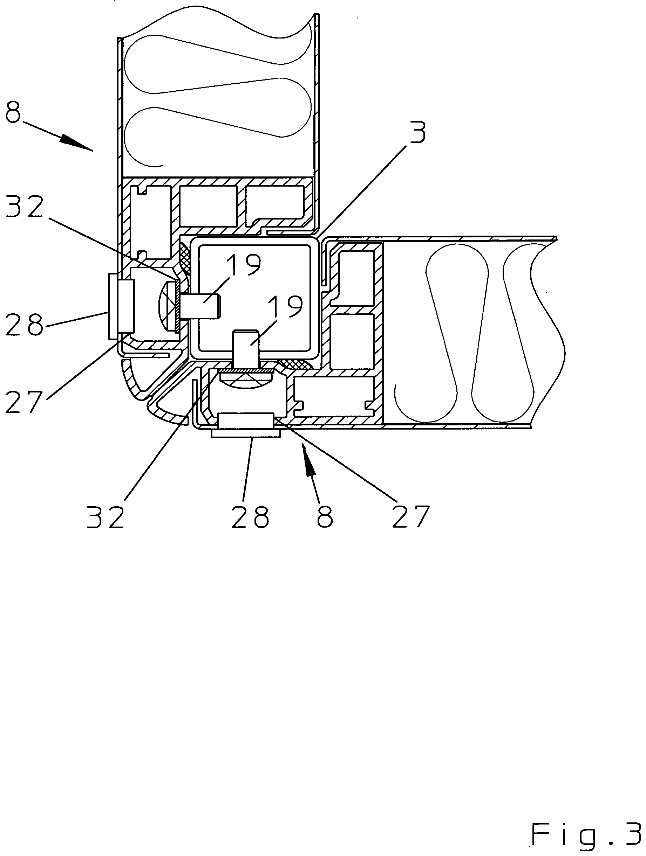

Jedes Profil 8 weist zwei Anlageschenkel 9, 10 mit jeweils einer Anlagefläche 11, 12 auf. Der eine Anlageschenkel 9 erstreckt sich mit seiner Anlagefläche 11 im montierten Zustand parallel zu der Außenseite des Gestellsegmentes 3. Der andere Anlageschenkel 10 erstreckt sich, wie in den Fig. 2 und 3 dargestellt, mit seiner Anlagefläche 12 im montierten Zustand parallel zu derjenigen Seite des Gestellsegmentes 3, die dem Inneren zugewandt ist, das durch die vier die offene Seitenfläche bildenden Gestellsegmente 3 umschlossen ist.

Dabei kann ein Anlageschenkel 10 mit seiner Anlagefläche 12 im montierten Zustand mit derjenigen Seite des Gestellsegmentes 3, die dem Inneren zugewandt ist, das durch die vier die offene Seitenfläche bildenden Gestellsegmente 3 umschlossen ist, ganz oder auch teilweise in Kontakt sein.

Es ist aber auch durchaus möglich, dass für eine leichte Montage des Paneelelements 4 der andere Anlageschenkel 10 im montierten Zustand in einem geringen Abstand unter Bildung eines schmalen Freiraumes zu derjenigen Seite des Gestellsegmentes 3 angeordnet ist, die dem Inneren zugewandt ist, das durch die vier die offene Seitenfläche bildenden Gestellsegmente 3 umschlossen ist.

Wie den Figuren 2 bis 5 zu entnehmen ist, sind die Außenwandung 6 und die Innenwandung 5 randseitig in Richtung der jeweiligen Dämmung 7 abgewinkelt. Um ein Vorstehen gegenüber der Anlagefläche 12 zu vermeiden, ist in der Anlagefläche 12, die mit derjenigen Seite des Gestellelementes 3 in Kontakt bzw. im Abstand zu dieser angeordnet ist, die dem Inneren des durch die vier Gestellsegmente 3, die die offene Seitenfläche bilden, zugewandt ist, ein Rücksprung 13 zur Aufnahme des abgewinkelten Bereichs der Innenwandung 5 vorgesehen. Ein entsprechender Rücksprung 14 findet sich auch in der Stirnfläche 15 des anderen Anlageschenkels 9 zur Aufnahme des abgewinkelten Randes der Außenwandung 6.

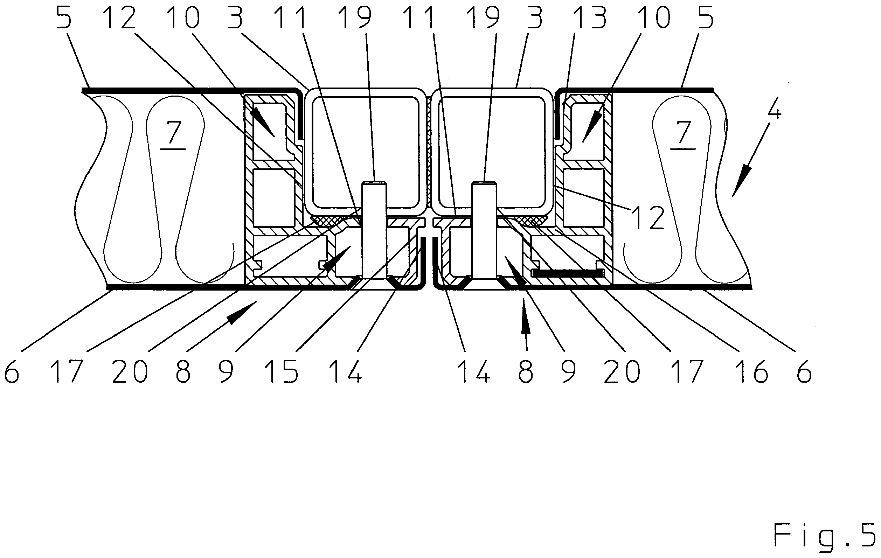

In Fig. 5 ist die Ausbildung des Profils 8 dargestellt, sofern zwei Gehäuse 1 miteinander verbunden sind und infolge dessen in diesem Bereich zwei benachbarte Paneelelemente 4 parallel fluchtend zueinander angeordnet sind. Wie Fig. 5 zu entnehmen ist, sind die Anlageschenkel 9 so ausgebildet, dass das Gestell außenseitig vollständig überdeckt wird. Die Länge des Anlageschenkels 9 entspricht dabei der Breite des betreffenden Gestellsegmentes 3.

Wie Fig. 5 zu entnehmen ist, ist im Bereich der Anlagefläche 11, die im montierten Zustand mit der Außenseite des Gestellsegmentes 3 in Kontakt ist, eine Aufnahmemulde 16 vorgesehen, in der eine Dichtung 17 angeordnet ist.

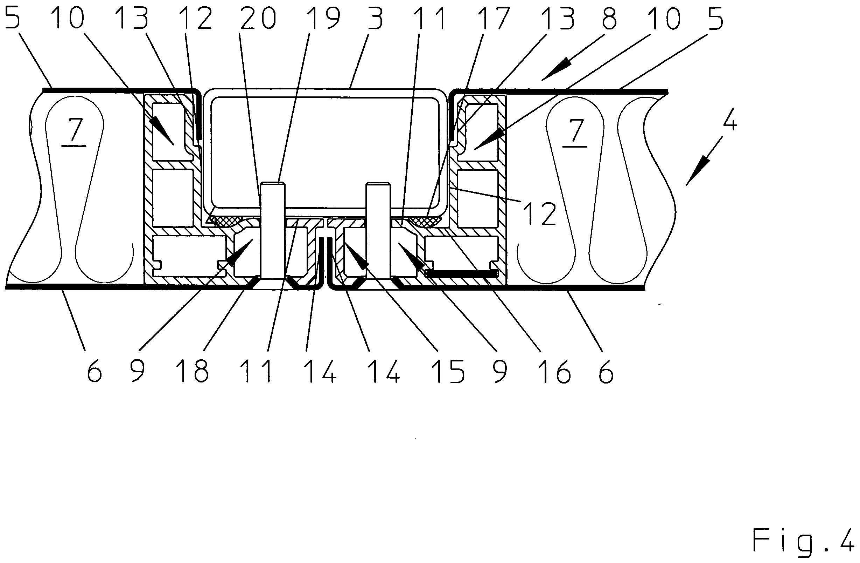

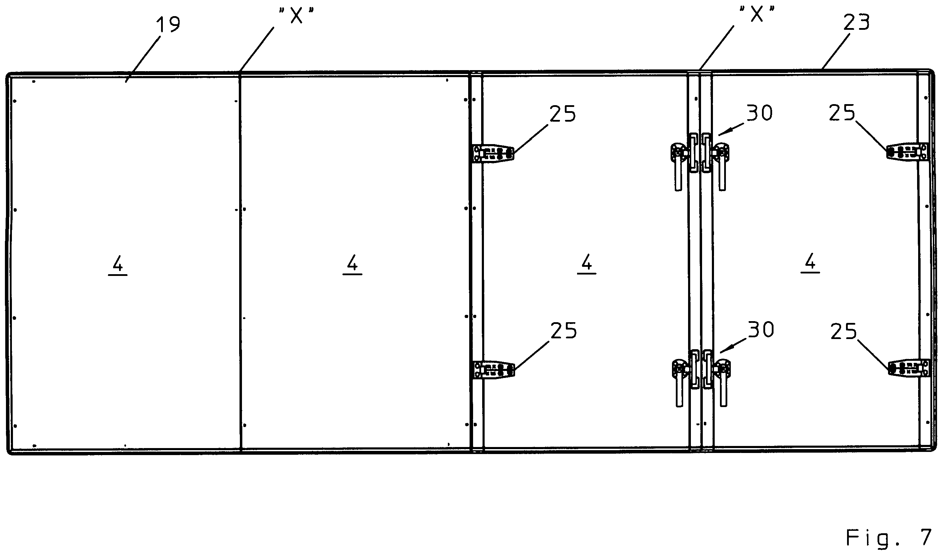

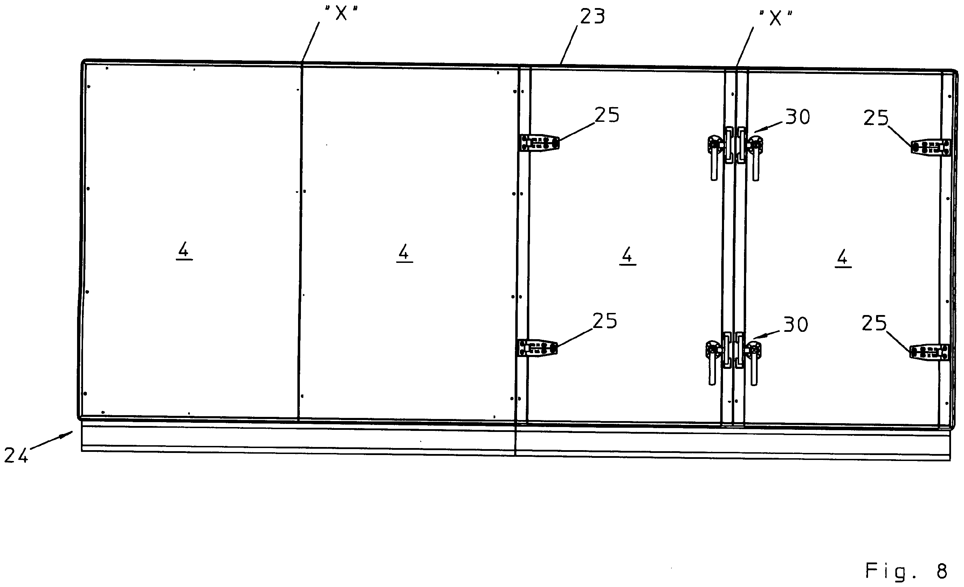

Fig. 4 zeigt einen Schnitt im Bereich eines als Zwischensteg oder Zwischenelement ausgebildeten Gestellsegmentes 3. Das Gestellsegment 3 ist bei diesem Ausführungsbeispiel breiter ausgebildet und dient zur Befestigung zweier aneinander angrenzender Paneelteilelemente 4. Ein solches als Zwischensteg oder Zwischenelement ausgebildetes Gestellsegment 3 ist beispielsweise an den mit "X" markierten Stellen bei den Ausführungsbeispielen nach den Fig. 7 oder 8 vorgesehen.

Wie in den Figuren dargestellt, ist in dem Anlageschenkel 9, der im montierten Zustand mit der Außenseite des Gestellsegmentes 3 in Kontakt ist, eine Aufnahme 18 für ein Befestigungsmittel 19, wie z.B. eine Schraube vorgesehen. Das Gestellsegment 3 weist ebenfalls ein mit der Aufnahme 18 fluchtendes Loch 20 auf.

Für eine thermische Trennung ist bei dem Ausführungsbeispiel nach Fig. 2 zwischen der Schraube und dem Profil 8 eine Kunststoffunterlegscheibe 26 vorgesehen. Bei dem dargestellten Ausführungsbeispiel ist zusätzlich noch der Kopf der Schraube durch einen Kunststoffüberzug 29 abgedeckt.

Bei dem Ausführungsbeispiel nach Fig. 3 ist jeder Schraubenkopf in dem Profil 8 versenkt. Hierzu weist jedes Profil 8 eine Öffnung 27 auf, die mit dem korrespondierenden Loch 20 fluchtet. Die Abmessungen der Öffnung 27 sind größer als die Abmessungen des betreffenden Schraubenkopfes. Jede Öffnung 27 ist durch einen Stopfen 28, der z.B. aus Kunststoff besteht, verschlossen. Zwischen dem als Schraube ausgebildeten Befestigungsmittel 19 und dem Gestellsegment 3 ist eine Scheibe 32, wie z. B. ein Blech oder ein Flachstahl, vorgesehen, um die Lasteneinbringung der Schraube flächig zu verteilen.

In Fig. 2 ist die Einbausituation im Bereich einer Ecke eines Gehäuses 1 dargestellt. Hierzu ist an dem Anlageschenkel 9 im Bereich seines freien Endes des die Außenseite des Gestellsegmentes 3 überdeckenden Anlageschenkels 9 ein Steg 21 vorgesehen, der in einem Winkel (α) von etwas mehr als 135° gegenüber der Anlagefläche 11 angeordnet ist. An seinem freien Ende weist der Steg 21 einen rückwärts gerichteten, in Richtung der Außenwandung 6 des Paneelelementes 4 weisenden Abschnitt 22 auf.

Der Steg 21 ist federnd ausgebildet. Im montierten Zustand werden die beiden Stege 21 der aneinandergrenzenden Paneelelemente 4 gegen ihre Rückstellkraft verlagert, so dass sie dicht und damit spaltfrei aneinander anliegen.

Der Abschnitt 22 ist von außen betrachtet gekrümmt als Radius ausgebildet. Die Kontur des Abschnittes 22 liegt dabei auf einer Kreislinie. Der Mittelpunkt dieser Kreislinie ist durch den Schnittpunkt S zweier rechtwinklig zur jeweiligen Außenwandung 6 ausgerichteter Geraden G bestimmt. Der Radius entspricht dem Abstand zwischen der Außenseite der Außenwandung 6 und dem Schnittpunkt S. Der Steg 21 und der Abschnitt 22 sind über einen abgerundeten Übergangsbereich 23 verbunden. Hierdurch wird eine Art Schattenfuge gebildet, so dass eventuelle Toleranzschwankungen optisch nicht auffallen.

Wie beispielsweise Fig. 2 zu entnehmen ist, ist die Länge des Stegs 21 und der Radius des Abschnittes 22 so gewählt, dass das freie Ende des Abschnittes 22 gegenüber der generellen Erstreckung der Außenwandung 6 des korrespondierenden Paneelelementes 4 um etwa 1 mm nach hinten in Richtung des Gestells zurückversetzt ist.

In dem Profil 8 können zur Erhöhung der Stabilität auch Versteifungselemente, beispielsweise aus Stahl, vorgesehen sein. Hierzu weist das Profil Stege 31 auf, die mit der Außenwandung des Profils 8 einen Freiraum zum Einführen eines entsprechenden Versteifungselementes bilden.

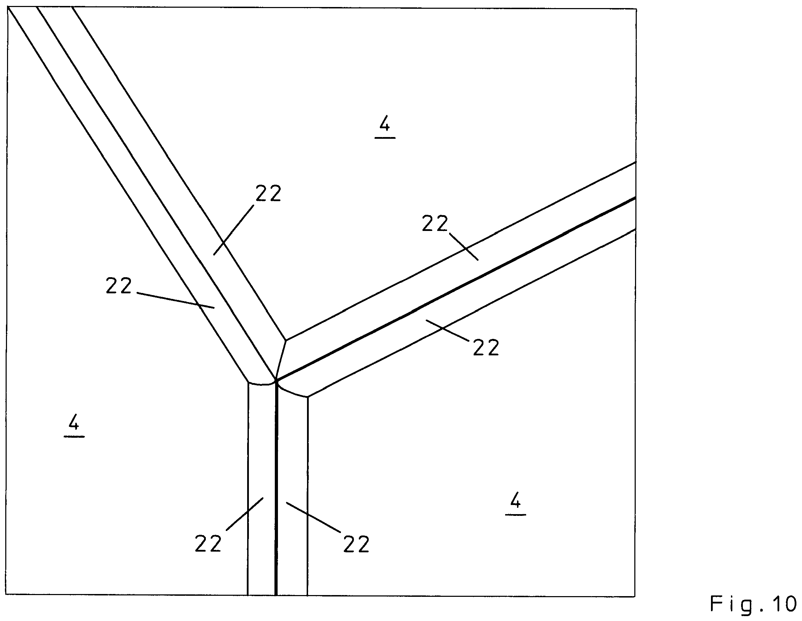

Fig. 10 stellt eine vergrößerte Darstellung einer Ecke eines Gehäuses 1 dar. Wie dieser zu entnehmen ist, sind von außen lediglich die Paneelelemente 4 sowie die Abschnitte 22 der Profile 8 erkennbar. Damit erhält das Gehäuse 1 ein ansprechendes äußeres Erscheinungsbild. Die Gestellsegmente 3 sind von außen nicht sichtbar.

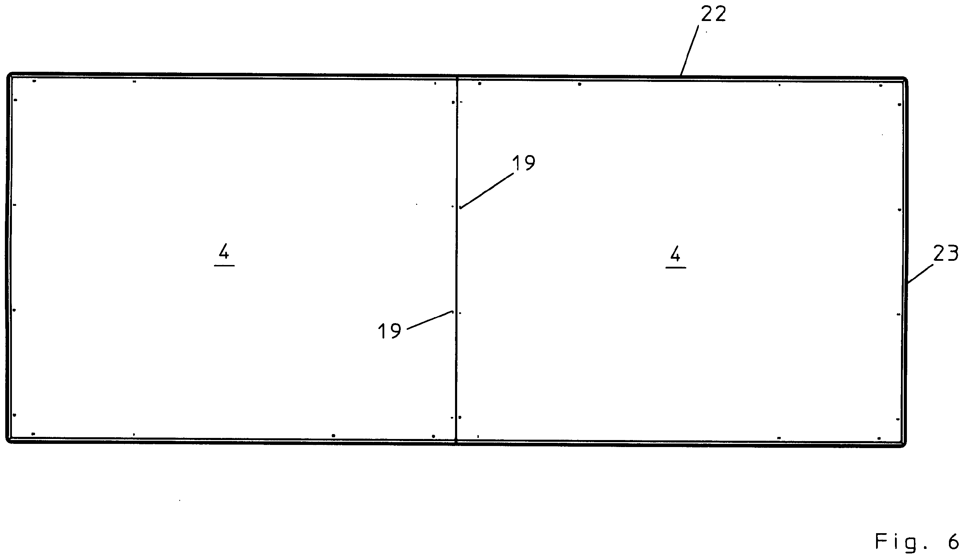

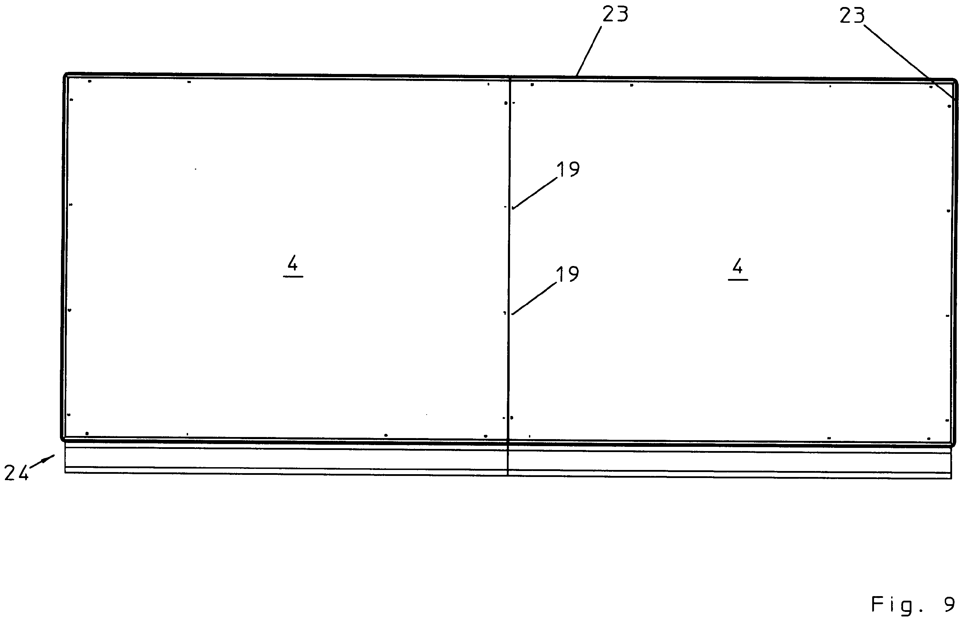

In den Fig. 6 bis 9 sind jeweils zwei miteinander verbundene Gehäuse 1 dargestellt, wobei sich die Ausführungsform nach den Fig. 8 und 9 von der Ausführungsform nach den Fig. 6 und 7 nur dadurch unterscheidet, dass eine unterseitige Rahmenkonstruktion 24 als Auflager vorgesehen ist. Die Rahmenkonstruktion 24 befindet sich unterhalb des das Gehäuse 1 unterseitig verschließenden Paneelelementes 4 und wird beispielsweise im Bereich der Ecken der Gestelle mit diesen verschraubt. Die Rahmenkonstruktion 24 wird mittels Befestigungsmitteln 19 unterseitig an dem entsprechenden Gehäuse 1 befestigt.

Bei den in den Fig. 6 bis 9 dargestellten Ausführungsformen ist im Bereich der Vorderseite der beiden Gehäuse 1 jedes Paneelelement 4 aus jeweils zwei Paneelteilelementen 4 aufgebaut.

Wie den Fig. 7 und 8 zu entnehmen ist, sind die beiden Paneelteilelemente 4 des linken Gehäuses 1 fest mit jeweils vierzehn Befestigungsmitteln 19 an dem Gestell befestigt.

Die beiden Paneelteilelemente 4 des rechten Gehäuses 1 sind jeweils als Tür ausgebildet. Über Scharniere 25 sind die als Türen ausgebildeten Paneelteilelemente 4 schwenkbar befestigt. Zum Verschließen sind Griffe 30 vorgesehen, die mit dem als Zwischensteg oder Zwischenelement ausgebildeten Gestellsegment 3 (mit "X" markierte Stelle) verschraubt sind.

## Patentansprüche

1. Quaderförmiges, insbesondere kubusförmiges, Gehäuse (1) zur Aufnahme von Komponenten einer klima- und/oder raumlufttechnischen Anlage, wie beispielweise einem Ventilator, einem Filter, einem Wärmeübertrager oder dergleichen, wobei das Gehäuse (1) zumindest eine Lufteintrittsöffnung (2), zumindest eine Luftaustrittsöffnung sowie ein Gestell aufweist, wobei das Gestell aus wenigstens zwölf Gestellsegmenten (3), welche die Kantenlinien bilden, besteht und die Gestellsegmente (3) sechs offene Seitenflächen aufspannen, und jede offene Seitenfläche, sofern das Gehäuse (1) mit dieser offenen Seitenfläche nicht zumindest in einem Teilbereich dieser Seitenfläche dichtend mit der offenen Seitenfläche eines benachbarten Gehäuses (1) zusammenwirkt, mit einem Paneelelement (4) verschlossen ist, welches eine die offene Seitenfläche verschließende Innenwandung (5), eine die offene Seitenfläche verschließende Außenwandung (6) und eine zwischen der Innenwandung (5) und der Außenwandung (6) befindliche Dämmung (7), insbesondere einen aus Dämmmaterial bestehenden Kern, aufweist, **dadurch gekennzeichnet, dass** jedes Paneelelement (4) im Bereich jeder Kante ein die Außen- und Innenwandung (6, 5) thermisch trennendes Profil (8), insbesondere Kunststoffprofil, aufweist, wobei das Profil (8) zwei Anlageschenkel (9, 10) mit jeweils einer Anlagefläche (11, 12) aufweist, wobei der eine Anlageschenkel (9) mit seiner Anlagefläche (11) im montierten Zustand mit der Außenseite des Gestellsegmentes (3) direkt oder über wenigstens ein weiteres Bauteil in Kontakt ist und der andere Anlageschenkel (10) mit seiner Anlagefläche (12) im montierten Zustand derjenigen Seite des Gestellsegmentes (3), die in Richtung des durch die vier die offene Seitenfläche bildenden Gestellsegmente (3) umschlossenen Inneren weisend angeordnet ist, zugewandt ist, wobei die jeweiligen Anlageschenkel (9) zweier aneinandergrenzender Profile benachbarter Paneelelemente (4) so ausgebildet sind, dass das Gestell zumindest außenseitig überdeckt wird.

2. Gehäuse (1) nach dem vorhergehenden Anspruch, **dadurch gekennzeichnet, dass** zumindest jeweils ein Anlageschenkel (9) aneinandergrenzender Profile (8) im Bereich seines freien Endes des die Außenseite des Gestellsegmentes (3) überdeckenden Anlageschenkels (9) in einem Winkel (α) von etwa 135° zur Anlagefläche (11) ausgebildet ist.

3. Gehäuse (1) nach einem der Ansprüche 1 oder 2, **dadurch gekennzeichnet, dass** zumindest jeweils ein Anlageschenkel (9) aneinandergrenzender Profile (8) im Bereich seines freien Endes des die Außenseite des Gestellsegmentes (3) überdeckenden Anlageschenkels (9) einen in einem Winkel (α) von etwa 135° zur Anlagefläche (11) angeordneten, insbesondere im Bereich der Innenkante angeordneten, Steg (21) aufweist, der an seinem freien Ende einen rückwärtsgerichteten, in Richtung der Außenwandung (6) des Paneelelementes (4) weisenden Abschnitt (22) aufweist.

4. Gehäuse (1) nach dem vorhergehenden Anspruch, **dadurch gekennzeichnet, dass** der Steg (21) federnd ausgebildet ist und der Winkel (α) etwas größer als 135°, vorzugsweise etwa 138°, ist.

5. Gehäuse (1) nach einem der Ansprüche 3 oder 4, **dadurch gekennzeichnet, dass** der Abschnitt (22) von außen betrachtet gekrümmt als Radius ausgebildet ist.

6. Gehäuse (1) nach einem der Ansprüche 3 bis 5, **dadurch gekennzeichnet, dass** der Steg (21) und der Abschnitt (22) über einen abgerundeten Übergangsbereich (23) verbunden sind.

7. Gehäuse (1) nach einem der vorhergehenden Ansprüche, **dadurch gekennzeichnet, dass** das Profil (8) Glas- und/oder Kohlefaser beinhaltet.

8. Gehäuse (1) nach einem der vorhergehenden Ansprüche, **dadurch gekennzeichnet, dass** das Profil (8) Polyamid beinhaltet.

9. Gehäuse (1) nach einem der vorhergehenden Ansprüche, **dadurch gekennzeichnet, dass** das Profil (8) als Hohlkammerprofil ausgebildet ist.

10. Gehäuse (1) nach einem der vorhergehenden Ansprüche, **dadurch gekennzeichnet, dass** in dem Anlageschenkel (9), der im montierten Zustand mit der Außenseite des Gestellsegmentes (3) in Kontakt ist, zumindest eine Aufnahme (18) für ein Befestigungsmittel (19), wie eine Schraube, einen Klips oder Drehverschluss oder dergleichen, vorgesehen ist.

11. Gehäuse (1) nach einem der vorhergehenden Ansprüche, **dadurch gekennzeichnet, dass** zumindest ein Befestigungsmittel (19) vorgesehen ist, welches insbesondere gegenüber der Außenwandung (6) und/oder Innenwandung (5) thermisch getrennt ist und/oder welches insbesondere mit einer Aufnahme (18) für ein Befestigungsmittel (19) zusammenwirkt.

12. Gehäuse (1) nach dem vorhergehenden Anspruch, **dadurch gekennzeichnet, dass** zur thermischen Trennung eine Unterlegscheibe (26), insbesondere eine Kunststoffunterlegscheibe 26, vorgesehen ist.

13. Gehäuse (1) nach einem der Ansprüche 1 bis 12, **dadurch gekennzeichnet, dass** zumindest ein Befestigungsmittel (19) in dem Profil (8) versenkt ist.

14. Gehäuse (1) nach einem der vorhergehenden Ansprüche, **dadurch gekennzeichnet, dass** im Bereich der Anlagefläche (11, 12), insbesondere der im montierten Zustand mit der Außenseite des Gestellsegmentes (3) in Kontakt befindlichen Anlagefläche (11), eine Dichtung (17), insbesondere eine geschäumte Dichtung, vorgesehen ist.

15. Gehäuse (1) nach dem vorhergehenden Anspruch, **dadurch gekennzeichnet, dass** die Dichtung (17) in einer, insbesondere in der Anlagefläche (11, 12) vorgesehenen, Aufnahmemulde (16) angeordnet ist.

16. Gehäuse (1) nach einem der vorhergehenden Ansprüche, **dadurch gekennzeichnet, dass** die Außenwandung (6) und/oder die Innenwandung (5) randseitig in Richtung der entsprechenden Dämmung (7) abgewinkelt ist(sind).

17. Gehäuse (1) nach einem der vorhergehenden Ansprüche, **dadurch gekennzeichnet, dass** zumindest ein Paneelelement (4) als Tür ausgebildet ist.

18. Gehäuse (1) nach einem der vorhergehenden Ansprüche, **dadurch gekennzeichnet, dass** die Gestellsegmente (3) zweier benachbarter Gehäuse (1), insbesondere durch Verschrauben, miteinander verbunden sind.

19. Gehäuse (1) nach einem der vorhergehenden Ansprüche, **dadurch gekennzeichnet, dass** die Außen- und/oder Innenwandung (6, 5) aus Blech, insbesondere aus Stahlblech, besteht(bestehen).

20. Gehäuse (1) nach einem der vorhergehenden Ansprüche, **dadurch gekennzeichnet, dass** das Gestell aus Stahl, insbesondere Edelstahl oder verzinktem Stahl, besteht.

21. Gehäuse (1) nach einem der vorhergehenden Ansprüche, **dadurch gekennzeichnet, dass** zumindest ein Gestellsegment (3) einen viereckigen Querschnitt aufweist.

22. Gehäuse (1) nach einem der vorhergehenden Ansprüche, **dadurch gekennzeichnet, dass** das Gehäuse (1) im Bereich derjenigen offenen Seitenfläche, mit der es dichtend mit einer offenen Seitenfläche eines benachbarten Gehäuses (1) zusammenwirkt, ein Paneelelement (4) aufweist.

23. Gehäuse (1) nach einem der vorhergehenden Ansprüche, **dadurch gekennzeichnet, dass** das Gehäuse (1) im Bereich einer solchen offenen Seitenfläche, mit der es lediglich in einem Teilbereich dieser Seitenfläche dichtend mit einer offenen Seitenfläche eines benachbarten Gehäuses (1) zusammenwirkt, ein Paneelelement (4) aufweist, wobei das Paneelelement (4) nur diejenigen Teilbereiche der Seitenfläche verschließt, welche nicht durch die offene Seitenfläche des besagten benachbarten Gehäuses (1) verschlossen sind, wobei insbesondere das Paneelelement (4) eine die offene Seitenfläche verschließende Außenwandung (6) und eine zwischen der Innenwandung (5) und der Außenwandung (6) befindliche Dämmung (7), insbesondere einen aus Dämmmaterial bestehenden Kern, aufweist.

## Claims

1. Square-shaped, particularly cuboid, casing (1) for keeping components of a climate and/or room air control system, such as, for example, a ventilator, a filter, a heat exchanger, or the like, wherein the casing (1) comprises at least one air inlet opening (2), at least one air outlet opening, and a frame, wherein the frame consists of at least twelve frame segments (3), which form the edge lines, and the frame segments (3) span six open side surfaces, and each open side surface is closed by a panel element (4), inasmuch as the casing (1) does not interact with this open side surface, in sealing fashion, in at least one part region of this side surface, with the open side surface of an adjacent casing (1), said panel element comprising an inner wall (5) closing the open side surface, an outer wall (6) closing the open side surface, and an insulation piece (7) located between the inner wall (5) and the outer wall (6), in particular a core consisting of insulating material, **characterised in that** each panel element (4) comprises, in the region of each edge, a profile (8), in particular a plastic profile, thermally separating the outer and inner walls (6, 5), wherein the profile (8) comprises two bearing limbs (9, 10), in each case with a bearing surface (11, 12), wherein, in the fitted state, the one bearing limb (9) is in contact with its bearing surface, directly or by means of at least one further component, with the outer surface of the frame segment (3), and the other bearing limb (10), in the fitted state, faces towards that side of the frame segment (3) which is arranged pointing in the direction of the interior area enclosed by the four frame segments (3) forming the open side surface, wherein the respective bearing limbs (9) of two adjacent profiles of adjacent panel elements (4) are configured in such a way that the frame is at least covered over on the outside.

2. Casing (1) according to the preceding claim, **characterised in that** at least one bearing limb (9) in each case of adjacent profiles (8) is formed in the region of the free end of the bearing limb (9) covering the outside of the frame segment (3) at an angle (α) of some 135° to the bearing surface (11).

3. Casing (1) according to any one of claims 1 or 2, **characterised in that** at least one bearing limb (9) in each case of adjacent profiles (8), in the region of the free end of the bearing limb (9) covering the outside of the frame segment (3), arranged at an angle (α) of some 135° to the bearing surface (11), and arranged in particular in the region of the inner edge, comprises a web (21), which at its free end comprises a section (22) directed backwards and facing in the direction of the outer wall (6) of the panel element (4).

4. Casing (1) according to any one of the preceding claims, **characterised in that** the web (21) is configured as spring-loaded and the angle (α) is somewhat greater then 135°, preferably some 138°.

5. Casing (1) according to any one of claims 3 or 4, **characterised in that** the section (22) is configured, seen from the outside, as cambered as a radius.

6. Casing (1) according to any one of claims 3 or 5, **characterised in that** the web (21) and the section (22) are connected by means of a rounded transition region (23).

7. Casing (1) according to any one of the preceding claims, **characterised in that** the profile (8) contains glass fibres and/or carbon fibres.

8. Casing (1) according to any one of the preceding claims, **characterised in that** the profile (8) contains polyamide.

9. Casing (1) according to any one of the preceding claims, **characterised in that** the profile (8) is configured as a hollow chamber profile.

10. Casing (1) according to any one of the preceding claims, **characterised in that**, in the bearing limb (9), which in the fitted state is in contact with the outside of the frame segment (3), at least one mounting aperture (18) is provided for securing means (19), such as a screw, a clip, or rotary locking element or the like.

11. Casing (1) according to any one of the preceding claims, **characterised in that** at least one securing means (19) is provided for, which is thermally separated in particular against the outer wall (6) and/or the inner wall (5), and/or which interacts in particular with a mounting aperture (18) for the securing means (19).

12. Casing (1) according to any one of the preceding claims, **characterised in that**, for the thermal separation, an underlay disk (26) is provided, in particular a plastic underlay disk (26).

13. Casing (1) according to any one of claims 1 to 12, **characterised in that** at least one securing means (19) is sunk into the profile (8).

14. Casing (1) according to any one of the preceding claims, **characterised in that**, in the region of the bearing surface (11, 12), in particular of the bearing surface which in the fitted state is in contact with the outside of the frame segment (3), a seal (17) is provided, in particular a foamed seal.

15. Casing (1) according to any one of the preceding claims, **characterised in that** the seal (17) is arranged in an accommodation recess (16), provided in particular in the bearing surface (11, 12).

16. Casing (1) according to any one of the preceding claims, **characterised in that** the outer wall (6) and/or the inner wall (5) is/are angled on the edge side in the direction of the corresponding insulation piece (7).

17. Casing (1) according to any one of the preceding claims, **characterised in that** at least one panel element (4) is configured as a door.

18. Casing (1) according to any one of the preceding claims, **characterised in that** the frame segments (3) of two adjacent casings are connected to one another, in particular by screwing.

19. Casing (1) according to any one of the preceding claims, **characterised in that** the outer wall and/or the inner wall (6, 5) consist(s) of sheet metal, in particular of sheet steel.

20. Casing (1) according to any one of the preceding claims, **characterised in that** the frame consists of stainless steel or galvanized steel.

21. Casing (1) according to any one of the preceding claims, **characterised in that** at least one frame segment (3) comprises a rectangular cross-section.

22. Casing (1) according to any one of the preceding claims, **characterised in that** the casing (1) comprises a panel element (4) in the region of that open side surface with which it interacts in sealing fashion with an open side of an adjacent casing (1).

23. Casing (1) according to any one of the preceding claims, **characterised in that** the casing (1), in the region of such an open side with which it interacts in sealing fashion with an open side of an adjacent casing (1) only in a part region of this side surface, comprises a panel element (4), wherein the panel element (4) encloses only those part regions of the side surfaces which are not enclosed by the open side surface of the said adjacent casing (1), wherein, in particular, the panel element (4) comprises an outer wall (6) enclosing the open side surface, and an insulation piece (7) located between the inner wall (5) and the outer wall (6), in particular a core consisting of insulating material.

## Revendications

1. Boîtier (1) de forme parallélépipédique, notamment cubique, conçu pour recevoir des composants d'une installation technique de climatisation et/ou de ventilation telle qu'un ventilateur, un filtre, un transmetteur de chaleur ou un dispositif similaire, par exemple, ledit boîtier (1) comprenant au moins un orifice (2) d'entrée d'air, au moins un orifice de sortie d'air, ainsi qu'une ossature, laquelle ossature est composée d'au moins douze segments (3) formant les lignes d'arêtes, lesdits segments (3) de l'ossature couvrant l'étendue de six surfaces latérales ouvertes, sachant que chaque surface latérale ouverte est obturée par un élément de panneau (4) dans la mesure où ledit boîtier (1) ne coopère pas de manière étanche par cette surface latérale ouverte, au moins dans une région partielle de cette surface latérale, avec la surface latérale ouverte d'un boîtier (1) voisin, ledit élément étant doté d'un cloisonnement intérieur (5) qui occulte la surface latérale ouverte, d'un cloisonnement extérieur (6) qui occulte ladite surface latérale ouverte et d'une isolation (7), en particulier d'un noyau constitué d'un matériau isolant, interposé(e) entre ledit cloisonnement intérieur (5) et ledit cloisonnement extérieur (6), **caractérisé par le fait que** chaque élément de panneau (4) présente, dans la région de chaque arête, un profilé (8) et notamment un profilé en matière plastique qui marque la séparation thermique des cloisonnements (6, 5) extérieur et intérieur, lequel profilé (8) comprend deux ailes d'appui (9, 10) respectivement pourvues d'une surface d'appui (11, 12), l'une (9) desdites ailes d'appui étant en contact par sa surface d'appui (11) avec la face extérieure du segment (3) de l'ossature, à l'état monté, directement ou par l'intermédiaire d'au moins une pièce structurelle additionnelle, et l'autre aile d'appui (10) étant tournée par sa surface d'appui (12), à l'état monté, vers le côté dudit segment (3) de l'ossature qui est agencé pour pointer en direction de l'espace interne ceinturé par les quatre segments (3) de l'ossature formant la surface latérale ouverte, les ailes d'appui (9) respectives de deux profilés d'éléments de panneau (4) voisins, limitrophes l'un de l'autre, étant réalisées de façon telle que ladite ossature soit recouverte, au moins à la face extérieure.

2. Boîtier (1) selon la revendication précédente, **caractérisé par le fait qu'**au moins une aile d'appui respective (9) de profilés (8) mutuellement limitrophes est ménagée, dans la région de l'extrémité libre de ladite aile d'appui (9) recouvrant la face externe du segment (3) de l'ossature, en décrivant un angle (α) d'environ 135° avec la surface d'appui (11).

3. Boîtier (1) selon l'une des revendications 1 ou 2, **caractérisé par le fait qu'**au moins une aile d'appui respective (9) de profilés (8) mutuellement limitrophes comporte, dans la région de l'extrémité libre de ladite aile d'appui (9) recouvrant la face externe du segment (3) de l'ossature, une membrure (21) qui décrit un angle (α) d'environ 135° avec la surface d'appui (11), est notamment disposée dans la région de l'arête intérieure et est munie, à son extrémité libre, d'un tronçon (22) dirigé vers l'arrière et pointant et direction du cloisonnement extérieur (6) de l'élément de panneau (4).

4. Boîtier (1) selon la revendication précédente, **caractérisé par le fait que** la membrure (21) est de réalisation élastique, l'angle (α) étant sensiblement supérieur à 135° et mesurant, de préférence, environ 138°.

5. Boîtier (1) selon l'une des revendications 3 ou 4, **caractérisé par le fait que** le tronçon (22) est réalisé sous la forme d'un rayon, avec courbure en observant de l'extérieur.

6. Boîtier (1) selon l'une des revendications 3 à 5, **caractérisé par le fait que** la membrure (21) et le tronçon (22) sont reliés par l'intermédiaire d'une zone de transition (23) arrondie.

7. Boîtier (1) selon l'une des revendications précédentes, **caractérisé par le fait que** le profilé (8) renferme des fibres de verre et/ou de carbone.

8. Boîtier (1) selon l'une des revendications précédentes, **caractérisé par le fait que** le profilé (8) contient du polyamide.

9. Boîtier (1) selon l'une des revendications précédentes, **caractérisé par le fait que** le profilé (8) est réalisé en tant que profilé à chambre creuse.

10. Boîtier (1) selon l'une des revendications précédentes, **caractérisé par** la présence, dans l'aile d'appui (9) en contact avec la face externe du segment (3) de l'ossature à l'état monté, d'au moins un logement (18) affecté à un moyen de fixation (19) tel qu'une vis, une agrafe élastique ou une liaison tournante, voire un élément similaire.

11. Boîtier (1) selon l'une des revendications précédentes, **caractérisé par** la présence d'au moins un moyen de fixation (19) qui est, en particulier, séparé thermiquement par rapport au cloisonnement extérieur (6) et/ou au cloisonnement intérieur (5), et/ou qui coopère notamment avec un logement (18) affecté à un moyen de fixation (19).

12. Boîtier (1) selon la revendication précédente, **caractérisé par le fait qu'**une rondelle de calage (26), en particulier une rondelle de calage (26) en matière plastique, est prévue pour instaurer la séparation thermique.

13. Boîtier (1) selon l'une des revendications 1 à 12, **caractérisé par le fait qu'**au moins un moyen de fixation (19) est encaissé dans le profilé (8).

14. Boîtier (1) selon l'une des revendications précédentes, **caractérisé par le fait qu'**une garniture d'étanchement (17), en particulier une garniture d'étanchement en mousse, est prévue dans la région de la surface d'appui (11, 12), notamment de la surface d'appui (11) qui est en contact, à l'état monté, avec la face externe du segment (3) de l'ossature.

15. Boîtier (1) selon la revendication précédente, **caractérisé par le fait que** la garniture d'étanchement (17) est logée dans une creusure réceptrice (16) prévue, en particulier, dans la surface d'appui (11, 12).

16. Boîtier (1) selon l'une des revendications précédentes, **caractérisé par le fait que** le cloisonnement extérieur (6) et/ou le cloisonnement intérieur (5) est (sont) coudé(s) marginalement, en direction de l'isolation (7) correspondante.

17. Boîtier (1) selon l'une des revendications précédentes, **caractérisé par le fait qu'**au moins un élément de panneau (4) est réalisé sous la forme d'une porte.

18. Boîtier (1) selon l'une des revendications précédentes, **caractérisé par le fait que** les segments (3) de l'ossature de deux boîtiers (1) voisins sont reliés mutuellement, en particulier par vissage.

19. Boîtier (1) selon l'une des revendications précédentes, **caractérisé par le fait que** le cloisonnement extérieur (6) et/ou le cloisonnement intérieur (5) consiste(nt) en de la tôle, notamment en de la tôle d'acier.

20. Boîtier (1) selon l'une des revendications précédentes, **caractérisé par le fait que** l'ossature consiste en de l'acier, notamment en de l'acier fin ou en de l'acier galvanisé.

21. Boîtier (1) selon l'une des revendications précédentes, **caractérisé par le fait qu'**au moins un segment (3) de l'ossature présente une section transversale rectangulaire.

22. Boîtier (1) selon l'une des revendications précédentes, **caractérisé par le fait que** ledit boîtier (1) est pourvu d'un élément de panneau (4) dans la région de la surface latérale ouverte par laquelle il coopère, de manière étanche, avec une surface latérale ouverte d'un boîtier (1) voisin.

23. Boîtier (1) selon l'une des revendications précédentes, **caractérisé par le fait que** ledit boîtier (1) est pourvu d'un élément de panneau (4) dans la région d'une surface latérale ouverte par laquelle il coopère de manière étanche, uniquement dans une région partielle de cette surface latérale, avec une surface latérale ouverte d'un boîtier (1) voisin, lequel élément de panneau (4) obture uniquement les régions partielles de ladite surface latérale qui ne sont pas obturées par la surface latérale ouverte dudit boîtier (1) voisin, sachant notamment que ledit élément de panneau (4) est doté d'un cloisonnement extérieur (6) qui occulte ladite surface latérale ouverte et d'une isolation (7), en particulier d'un noyau constitué d'un matériau isolant, interposé(e) entre le cloisonnement intérieur (5) et ledit cloisonnement extérieur (6).
